# EUROPÄISCHE PATENTSCHRIFT

(11) **EP 1 700 873 B1**
(45) Veröffentlichungstag und Bekanntmachung des Hinweises auf die Patenterteilung: **14.09.2011**
(21) Anmeldenummer: 06004171.2
(22) Anmeldetag: 02.03.2006
(51) Int. Cl.: C08G 18/71, C08G 18/67, C09D 175/16

(54) **Spezielle Allophanate enthaltende, modifizierte Polyurethane**
Special allophanates containing modified polyurethanes
Polyuréthanes contenant des allophanates spéciaux

(30) Priorität: 11.03.2005 DE 102005011231
(43) Veröffentlichungstag der Anmeldung: 13.09.2006
(73) Patentinhaber: Bayer MaterialScience AG, 51368 Leverkusen (DE)
(72) Erfinder: Ludewig, Michael, Dr., 51065 Köln (DE); Weikard, Jan, Dr., 51519 Odenthal (DE); Stöckel, Nicolas, Dr., 50733 Köln (DE)

(56) Entgegenhaltungen:
- WO-A-92/13018
- DE-A1- 10 209 305
- US-A- 4 263 294
- H. ULRICH ET AL.: "Syntheses and some reactions of allophanoyl chlorides" JOURNAL OF ORGANIC CHEMISTRY, Bd. 29, 1964, Seiten 2401-2404, XP002384928
- M. SHI ET AL.: "Perfluorinated earth metals catalyzed reactions of 5-methylene-2-oxazolidinone and 5-methylene-1,3-thiazolidine-2-thione with isocyanates" JOURNAL OF FLUORINE CHEMISTRY, Bd. 109, 2001, XP002384929

## Beschreibung

Die vorliegende Erfindung betrifft ein Verfahren zur einfachen Herstellung von niedrigviskosen Allophanaten ausgehend von Urethanen sowie die nach diesem Verfahren erhältlichen Produkte und deren Verwendung.

Bedingt durch die ökologischen und ökonomischen Anforderungen an moderne Polyurethansysteme möglichst wenig oder gar kein organisches Lösungsmittel zur Viskositätseinstellung zu verwenden, besteht der Wunsch, bereits niedrigviskose Rohstoffe zu verwenden. Bekannt hierfür sind seit langem Polyisocyanate mit Allophanatstruktur wie sie u.a. in EP-B 0 682 012 beschrieben werden.

In der Technik werden diese durch Umsetzung eines ein- oder mehrwertigen Alkohols mit großen Mengen an überschüssigem aromatischen, aliphatischen und/oder cycloaliphatischen Diisocyanat hergestellt (vgl. GB-A 994 890, US 3,769,318, EP-A 0 000 194 oder EP-A 0 712 840). Hier werden ausschließlich Di- oder Polyisocyanate eingesetzt, um wiederum ein isocyanatfunktionelles Bindemittel zu erhalten. Um eine vorzeitige Vernetzung zu unterbinden, ist es notwendig, einen Überschuss an Polyisocyanat zu verwenden, der nach erfolgter Urethanisierung und Allophanatisierung mittels Abdestillation im Vakuum entfernt werden muss. Bei diesem Konzept ist über den Allophanat-Stickstoff eine weitere Isocyanat-Gruppe als funktionelle Gruppe verknüpft.

Es ist ebenfalls möglich, Allophanate indirekt, aus anderen Isocyanatderivaten, als Urethanen und Isocyanaten herzustellen. So beschreibt die EP-A 0 825 211 ein Verfahren zum Aufbau von Allophanatstrukturen aus Oxadiazintrionen; ein weiterer Weg ist die Öffnung von Uretdionen (vgl. Proceedings of the International Waterborne, High-Solids, and Powder Coatings Symposium 2001, 28th, 405-419 sowie US-A 2003 0153713) zu Allophanat-Strukturen. Beide Wege benötigen allerdings veredelte Rohstoffe als Ausgangsmaterial und führen nur zu einem an Nebenprodukten reichen Allophanatprodukt. Auch hier werden beim Aufbau der Vorstufen ausschließlich mindestens difunktionelle Polyisocyanate eingesetzt.

Auch die Verwendung von Monoisocyanaten wurde schon im Zusammenhang mit der Allophanatchemie offenbart. In den Anmeldungen US 5,663,272 und US 5,567,793 wird Phenylisocyanat verwendet, um nach Umsetzung mit einem polyfunktionellen Alkohol zu einem NCO- ond OH-Gruppen-freien Urethan zu gelangen, das anschließend durch Allophanatisierung mit speziellen MDI-Typen zu einem flüssigen MDI-Polyisocyanat modifiziert wird. Da das Monoisocyanat im Urethanisierungsschritt und nicht bei der Allophanatisierung eingesetzt wird, trägt die Zielstruktur den nichtfunktionellen Rest an dem Urethan-Stickstoffatom und nicht an dem Allophanat-Stickstoffatom. Weiterhin enthält das Produkt vor der Weiterverarbeitung monomeres Diisocyanat.

Der vorliegenden Erfindung lag nun die Aufgabe zugrunde, ein möglichst einfach und vielseitig anzuwendendes Verfahren bereitzustellen, um polyisocyanatbasierte Rohstoffe insbesondere zur Herstellung von Beschichtungen, Klebstoffen und Dichtstoffen herstellen zu können, deren Viskosität so niedrig ist, dass ein Lösemittelzusatz bei der Weiterverarbeitung dieser Rohstoffe zu applikationsfertigen Systemen nicht mehr oder nur noch in verringertem Maße erforderlich ist.

Es wurde nun gefunden, dass sich derartige niedrigviskose Lackrohstoffe aus Urethanen herstellen lassen, wenn man die darin enthaltenen Urethangruppen ganz oder teilweise mit Monoisocyanaten unter Allophanatbildung umsetzt. Das dabei resultierende Produkt hat anwendungstechnisch gesehen die gleichen Vorzüge und Anwendungsfelder wie das Ausgangsmaterial, nur ist es niedrigviskoser, so dass bei Weiterverarbeitung deutlich weniger Lösemittel oder gar keines zugesetzt werden muss. Ein weiterer Vorteil ist, dass man diese Verfahrensweise breit auch auf bereits marktetablierte urethangruppenhaltige Produkte anwenden kann, wodurch sich deren Viskosität sehr einfach senken lässt.

Gegenstand der Erfindung ist daher ein Verfahren zur Senkung der Viskosität von Zusammensetzungen enthaltend urethangruppenhaltige Verbindungen, bei dem die darin enthaltenen Urethangruppen ganz oder teilweise mit Monoisocyanaten zu Allophanatgruppen umgesetzt werden und die urethangruppenhaltige Verbindung wenigstens eine strahlenhärtende Gruppe ausgewählt aus der Gruppe von Vinylether-, Maleinyl-, Fumaryl-, Maleinimid-, Dicyclopentadienyl-, Acrylamid-, Acryl- und Methacryl-Gruppen enthält.

Ferner sind allophanatgruppenhaltige Verbindungen sowie Zusammensetzungen enthaltend solche Verbindungen ein Gegenstand der Erfindung, wobei die in den erfindungsgemäßen Verbindungen enthaltenden Allophanatgruppen zu mindestens 10 Mol-% der allgemeinen Formel (I) entsprechen 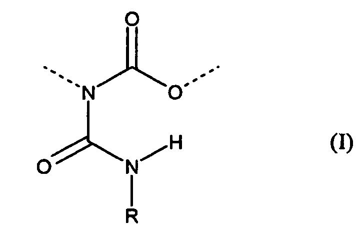 wobei R ein Methyl-, Isopropyl-, n-Butyl-, tert.-Butyl-, n-Hexyl-, Cyclohexyl-, Stearyl-, Phenyl- (einschl. chlorierte Formen), 1-Naphtyl-, o-, m-, oder p-Toloyl- (einschl. fluorierte und chlorierte Formen), p-Isopropylphenyl-, 2,6-Diisopropylphenyl- oder p-Toluolsulfonylrest ist, und die Verbindungen wenigstens eine strahlenhärtende Gruppen ausgewählt aus der Gruppe von Vinylether-, Maleinyl-, Fumaryl-, Maleinimid-, Dicyclopentadienyl-, Acrylamid-, Acryl- und Methacryl-Gruppen enthalten.

Die anspruchsgemäßen allophanatgruppenhaltigen Verbindungen sind durch Umsetzung beliebiger urethangruppenhaltiger Ausgangsverbindungen mit Monoisocyanaten der allgemeinen Formel R-NCO zugänglich, wobei R ein Methyl-, Isopropyl-, n-Butyl-, tert.-Butyl-, n-Hexyl-, Cyclohexyl-, Stearyl-, Phenyl- (einschl. chlorierte Formen), 1-Naphtyl-, o-, m-, oder p-Toloyl- (einschl. fluorierte und chlorierte Formen), p-Isopropylphenyl-, 2,6-Diisopropylphenyl- oder p-Toluolsulfonylrest ist, und die Verbindungen wenigstens eine strahlenhärtende Gruppe ausgewählt aus der Gruppe von Vinylether-, Maleinyl-, Fumaryl-, Maleinimid-, Dicyclopentadienyl-, Acrylamid-, Acryl- und Methacryl-Gruppen enthalten.

Beispielsweise geeignete Monoisocyanate sind Methylisocyanat, Isopropylisocyanat, n-Butylisocyanat, tert.-Butylisocyanat, n-Hexylisocyanat, Cyclohexylisocyanat, Stearylisocyanat, Phenylisocyanat (einschl chlorierte Formen), 1-Naphtylisoeyanat, Toloylisocyanat (metha, para und ortho-Form, einschl fluorierte und chlorierte Formen), p-Isopropylphenylisocyanat, 2,6-Diisopropylphenylisocyanat und p-Toluolsulfonyldiisocyanat. Bevorzugte Monoisocyanate sind n-Butyl- oder n-Hexylisocyanat.

Das für die Allophanatbildung eingesetzte Monoisocyanat kann bezogen auf die vorhandenen Urethangruppen der Ausgangsverbindung im Unterschuss, äquimolar wie auch im Überschuss eingesetzt werden. In letzterem Fall muss das überschüssige Monoisocyanat nach vollendeter Reaktion nach einer dem Fachmann bekannten Methode, wie z.B. der Destillation oder Extraktion abgetrennt werden. Bevorzugt ist es daher, pro 1,0 mol Urethangruppen der Ausgangsverbindung 0,1 - 1,0 mol Monoisocyanat einzusetzen, besonders bevorzugt ist dabei der Einsatz von 0,5 - 1,0 mol Monoisocyanat.

Die Allophanatisierung der Urethangruppen durch die Monoisocyanate wird bevorzugt unter Einsatz von Katalysatoren durchgeführt.

Als Allophanatisierungskatalysator können dem Fachmann an sich bekannte Allophanatisierungskatalysatoren, wie die Zinksalze Zinkoctoat, Zinkacetylacetonat und Zink-2-ethylcaproat, oder Tetraalkylammoniumverbindungen, wie *N,N,N-*Trimethyl-*N*-2-hydroxypropylammoniumhydroxid, *N,N,N*-Trimethyl-*N*-2-hydroxypropylammonium-2-ethylhexanoat oder Cholin-2-ethylhexanoat verwendet werden. Bevorzugt ist die Verwendung von Zinkoctoat und der Tetraalkylammoniumverbindungen, besonders bevorzugt diejenige von Tetraalkylammoniumalkanoaten und Zinkoctoat und ganz besonders bevorzugt ist die von Cholin-2-ethylhexanoat als Allophanatisierungskatalysator.

Der Allophanatisierungskatalysator wird in Mengen von 0,001 - 5,0 Gew.-%, bevorzugt 0,01-1,0Gew.-% und besonders bevorzugt 0,05 - 0,5 Gew.-% bezogen auf Festgehalt des Verfahrensprodukts eingesetzt.

Der Allophanatisierungskatalysator kann in einer Portion auf einmal oder aber auch portionsweise oder auch kontinuierlich zugegeben werden. Falls ungesättigte polymerisationslabile Funktionen in der Reaktionsmischung vorliegen ist eine portionsweise oder kontinuierliche Zugabe bevorzugt, um Temperaturspitzen und dadurch induzierte unerwünschte Polymerisationsreaktionen der strahlenhärtenden Gruppen zu vermeiden. Besonders bevorzugt wird der Allophanatisierungskatalysator dann in einer Geschwindigkeit von 200 - 600 ppm/h zugegeben und der Reaktionsansatz zur Vervollständigung der Allophanatisierung solange weitergerührt, bis der gewünschte NCO-Gehalt des Endproduktes erreicht ist.

Es ist auch möglich den Allophanatisierungskatalysator nach dem Fachmann bekannten Methoden auf Trägermaterialien zu bringen und als heterogenen Katalysator zu verwenden.

Für den bevorzugten Fall, dass das für die Allophanatbildung eingesetzte Monoisocyanat bezogen auf die vorhandenen Urethangruppen der Ausgangsverbindung im Unterschuss, oder äquimolar eingesetzt wird, ist es bevorzugt die Reaktion der Allophanatisierung solange zu führen, bis der NCO-Gehalt des Produktes unter 1,0 Gew.-%, besonders bevorzugt unter 0,5 Gew.-% liegt.

Es ist für den weniger bevorzugten Fall, dass das für die Allophanatbildung eingesetzte Monoisocyanat bezogen auf die vorhandenen Urethangruppen der Ausgangsverbindung im Überschuss eingesetzt wird aber durchaus denkbar, eine NCO-haltige Ausgangsverbindung zu verwenden und die Reaktion der Allophanatisierung solange zu führen, bis der gewünschte NCO-Gehalt der Zielverbindung erreicht ist. In diesem Fall muss das überschüssige Monoisocyanat nach vollendeter Reaktion nach einer dem Fachmann bekannten Methode, wie z.B. der Destillation oder Extraktion abgetrennt werden.

Es ist grundsätzlich auch möglich, einen Restgehalt an NCO-Gruppen mit NCO-reaktiven Verbindungen wie z.B. Alkoholen nach beendeter Allophanatisierungsreaktion umzusetzen. Dadurch werden Produkte mit ganz besonders niedrigen NCO-Gehalten erhalten.

Die erfindungswesentliche Allophanatisierung wird bei Temperaturen von 20 bis 200°C, bevorzugt 20 bis 120°C, besonders bevorzugt von 40 bis 100°C, insbesondere bei 60 bis 90°C durchgeführt.

Es ist unerheblich, ob das erfindungsgemäße Verfahren kontinuierlich z.B. in einem StatikMischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Der Verlauf der Reaktion kann durch geeignete im Reaktionsgefäß installierte Meßgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Kontrolle auf vorhandene freie NCO Gruppen (für aliphatische NCO-Gruppen, Bande bei ca. v = 2272 cm⁻¹) und GC-Untersuchungen auf nicht umgesetzte NCO-Gruppen.

Bevorzugt entsprechen die in den erfindungsgemäßen allophanatgruppenhaltigen Verbindungen enthaltenden Allophanatgruppen zu mindestens 20 Mol-%, besonders bevorzugt mindestens 40 Mol-% der Struktureinheit der allgemeinen Formel (I).

Die erfindungsgemäßen Allophanate, insbesondere die auf Basis von HDI, weisen bevorzugt Scherviskositäten bei 23°C von≤ 150 000 mPas, besonders bevorzugt ≤ 80 000 mPas auf.

Als urethangruppenhaltige Ausgangsmaterialien sind prinzipiell alle Verbindungen geeignet, die wenigstens eine Urethangruppe pro Molekül aufweisen und auch freie NCO-Gruppen aufweisen können.

Bevorzugt weisen sie jedoch keine freien NCO-Gruppen auf.

Geeignete Urethane sind üblicherweise durch Umsetzung von isocyanatgruppenhaltigen Verbindungen mit Polyolen in einer gegebenenfalls katalysierten Additionsreaktion zugänglich.

Als isocyanatgruppenhaltige Verbindungen werden typischerweise aromatische, aliphatische und cycloaliphatische Polyisocyanate mit einem zahlenmittleren Molekulargewicht von unter 800 g/mol eingesetzt. Beispielsweise geeignet sind Diisocyanate aus der Reihe 2,4-/2,6-Toluoldiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische.

Bevorzugte Ausgangsstoffe für die Herstellung der urethangruppenhaltigen Verbindungen sind Hexamethylendiisocyanat (HDI), Isophorondiisocyanat (IPDI) und/oder 4,4'-Diisocyanatodicyclohexylmethan, ganz besonders bevorzugt diejenige von Hexamethylendiisocyanat.

Ebenfalls geeignet als isocyanathaltige Verbindungen sind Umsetzungsprodukte der vorgenannten Isocyanate mit sich selbst oder untereinander zu Uretdionen oder Isocyanuraten. Beispielhaft genannt seien Desmodur® N3300, Desmodur® N3400 oder Desmodur® N3600 (alle Bayer MaterialScience,

Leverkusen, DE).

Weiterhin geeignet sind auch Derivate von Isocyanaten, wie Allophanate oder Biurete. Beispielhaft genannt seien Desmodur® N100, Desmodur® N75MPA/BA oder Desmodur® VPLS2102 (alle Bayer

MaterialScience, Leverkusen, DE).

Funktionalisierte Allophanate können auch gemäß der Lehre der nicht vorveröffentlichten deutschen Patentanmeldung DE 10 200 40 488 73 durch ein Verfahren hergestellt werden, bei dem Isocyanate in einer Eintopf-Reaktion zunächst mit einem Unterschuss einer hydroxyfunktionellen Verbindung urethanisiert werden und dann in einem weiteren Schritt mit einem Allophanatisierungskatalysator zu Allophanaten umgesetzt werden. In diesem Fall ist es einerseits denkbar, die erfindungsgemäße Modifikation anschließend durchzuführen. Bevorzugt ist in diesem Fall aber eine Verfahrensweise, bei der das Monoisocyanat vor dem zweiten Schritt, nach abgeschlossener Urethanisierung, dem Reaktionsgemisch beizumengen und die erfindungsgemäße Modifikation parallel mit der Allophanatisierung entsprechend der nicht vorveröffentlichten deutschen Patentanmeldung DE 10 200 40 488 73 durchzuführen. Ein solcher Fall ist z.B. in Beispiel 1 der vorliegenden Anmeldung illustriert.

Grundsätzlich können Isocyanate zusätzlich Verbindungen enthalten, die bei Umsetzung mit Wasser (Hydrolyse) Chlor oder Chlorid freisetzen (Verbindungen mit hydrolisierbarem Chlor). Solche Verbindungen können in dem erfindungsgemäßen Verfahren zu einer Trübung des Harzes und einem unnötig hohen Verbrauch an Katalysator führen. Daher werden bevorzugt Isocyanate verwendet, die einen Gehalt von weniger als 1000 ppm hydrolysierbares Chlor enthalten. Besonders bevorzugt ist die Verwendung von Isocyanaten mit einem Gehalt von weniger als 500 ppm hydrolysierbarem Chlors und ganz besonders diejenige mit einem Gehalt von weniger als 200ppm.

Zur Urethanisierung können nieder- und/oder höhermolekulare Polyole eingesetzt werden.

Als niedermolekulare Polyhydroxylverbindungen können in der Polyurethan-Chemie übliche Polyole, mit Molekulargewichten von 62 bis 399 g/mol, wie Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6, Butantriol-1,2,4, Pentaerythrit, Chinit, Mannit, Sorbit, Methylglykosid und 4,3,6-Dianhydrohexite verwendet werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 18 000 g/mol, bevorzugt solche mit mittleren Molekulargewichten von 500 bis 6 500 g/mol. Bevorzugte höhermolekulare Hydroxylverbindungen sind Hydroxypolyether, Hydroxypolyester und Hydroxypolycarbonate der vorstehend genannten Art.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind im Durchschnitt 2 bis 4 Hydroxylgruppen aufweisende Propylenoxidpolyether, die bis zu 50 Gew.-% eingebaute Polyethylenoxid-Einheiten enthalten können. Es ist dabei sowohl denkbar, klassische Polyether, die auf Basis einer Katalyse mit z.B. Kaliumhydroxid hergestellt werden, einzusetzen, als auch solche Polyether, die mit den neueren Verfahren auf Basis der Doppelmetallcyanid-Katalysatoren hergestellt werden. Letztere Polyether haben in der Regel einen besonders niedrigen Gehalt an terminaler Unsättigung von weniger als 0,07 meq/g, enthalten deutlich weniger Monole und haben in der Regel eine geringe Polydispersität von weniger als 1,5. Der Einsatz solcher durch Doppelmetallcyanid-Katalyse hergestellten Polyether ist für den Fall der Verwendung von Polyethern bevorzugt.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasigen, vorzugsweise zweibasigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Adipinsäure, Phthalsäure, Isophthalsäure, Bernsteinsärue, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester.

Bevorzugt sind unterhalb 60°C schmelzende Hydroxypolyester mit 2 oder 3 endständigen OH-Gruppen.

Die in Frage kommenden Polycarbonatpolyole sind durch Reaktion von Kohlensäurederivaten, z.B. Diphenylcarbonat, Dimethylcarbonat oder Phosgen, mit Diolen erhältlich. Als derartige Diole kommen z.B. Ethylenglykol, Triethylenglykol, Tetraethylenglykol, Propandiol-1,2 und -1,3, Butandiol-1,4 und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Bevorzugt erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum Di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können sehr gut eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Daneben können auch weitere Verbindungen eingesetzt werden, die neben einer oder mehrerer OH-Gruppen auch noch weitere funktionelle Gruppen tragen. Bevorzugt sind dabei solche funktionelle Gruppen, die unter Einwirkung aktinischer Strahlung unter Polymerisation reagieren können (strahlenhärtende oder aktinisch härtende Gruppen).

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4. Auflage; Urban & Fischer Verlag, München 1999).

Unter Einwirkung aktinischer Strahlung mit ethylenisch ungesättigten Verbindungen unter Polymerisation reagierende Gruppen (strahlenhärtende Gruppen) werden im Rahmen der vorliegenden Erfindung Vinylether-, Maleinyl-, Fumaryl-, Maleinimid-, Dicyclopentadienyl-, Acrylamid-, Acryl- und Methacryl-Gruppen verstanden, wobei dies bevorzugt Vinylether-, Acrylat- und/oder Methacrylat-Gruppen, besonders bevorzugt Acrylatgruppen sind.

Beispiele solcher hydroxylgruppenhaltigen Verbindungen, die strahlenhärtende Gruppen aufweisen, sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)acrylat (z.B. PEM63P, Laporte Performance Chemicals Ltd., UK), Poly(ε-caprolacton)mono(meth)-acrylate wie z.B. Tone M100® (Dow, Schwalbach, DE), 2-Hydroxypropyl(meth)acrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi-(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ferner können als solche OH-funktionellen Verbindungen, die strahlenhärtende Gruppen aufweisen, auch die Umsetzungsprodukte von doppelbindungshaltigen Säuren mit gegebenenfalls doppelbindungshaltigen Epoxidverbindungen, wie die Umsetzungsprodukte von (Meth)acrylsäure mit Glycidyl(meth)acrylat oder Bisphenol-A-diglycidylether, in der Urethanisierung eingesetzt werden.

Ebenfalls können in der Urethanisierung ungesättigte Alkohole eingesetzt werden, die aus der Umsetzung von gegebenenfalls ungesättigten Säureanhydriden mit gegebenenfalls acrylatgruppenhaltigen Hydroxy- und Epoxidverbindungen erhalten werden. Beispielsweise sind dies die Umsetzungsprodukte von Maleinsäureanhydrid mit 2-Hydroxyethyl(meth)acrylat und Glycidyl-(meth)acrylat.

Bevorzugt werden bei der Urethanbildung Hydroxyethyl(meth)acrylat, Hydroxypropyl(meth)-acrylat, Hydroxybutyl(meth)acrylat und 3-Acryloyloxy-2-hydroxypropylmethacrylat (GAMA), ganz besonders bevorzugt Hydroxyethylacrylat und Hydroxypropylacrylat eingesetzt.

Neben OH-funktionellen Verbindungen können beim Aufbau der zugrunde liegenden Urethane auch weitere gegenüber NCO-Gruppen reaktive Verbindungen eingesetzt werden, die mit in die urethangruppenhaltige Verbindung eingebaut werden.

In einer bevorzugten Ausführungsform der Erfindung werden urethangruppenhaltige Verbindungen eingesetzt, die aus Komponenten der vorstehend genannten Art aufgebaut sind und dabei wenigstens eine strahlenhärtende Gruppe pro Molekül aufweisen.

Vor oder nach der Allophanatbildung können, sofern freie NCO-Gruppen in den zu allophanatisierenden bzw. allophanatisierten Verbindungen vorliegen, diese ganz oder teilweise mit den dem Fachmann an sich bekannten Blockierungsmitteln blockiert werden bzw. dies bereits bei Durchführung der Allophanatbildung sein.

Die Blockierungsmittel, dazu gegebenenfalls nötige Katalysatoren und Verfahrenbedingungen sind dem Fachmann auf diesem Gebiet bekannt bzw. von ihm durch Routineversuche zu ermitteln.

Sowohl bei der Urethanbildung als auch bei der eigentlichen Allophanatbildung durch die Monoisocyanate R-NCO können Lösemittel oder Reaktivverdünner eingesetzt werden.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Insbesondere, wenn in den zu allophanatisierenden urethangruppenhaltigen Verbindungen strahlenhärtende Gruppen enthalten, kann es sinnvoll sein, Reaktivverdünner mitzuverwenden, da so Viskositätseinstellungen möglich sind, ohne den VOC-Gehalt zu erhöhen. Solche Reaktivverdünner sind in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Für den Fall das die urethangruppenhaltigen Verbindungen, deren Viskosität erfindungsgemäß durch Allophanatisierung mit Monoisocyanaten gesenkt werden soll, strahlenhärtende Gruppen aufweisen, so ist es sinnvoll Stabilisatoren während oder nach der Urethanbildung zuzusetzen, um eine vorzeitige Polymerisation zu verhindern. Solche Stabilisatoren können selbstverständlich auch erstmals oder ergänzend bei der anschließenden Allophanatbildung mittel Monoisocyanat zugegeben werden.

Ein bevorzugter Stabilisator ist Phenothiazin. Mögliche andere Stabilisatoren sind Phenole wie para-Methoxyphenol, - 2,5-Di-tert.-butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente A) gebunden werden können. Hierfür besonders geeignet sind 2,2,6,6-Tetramethyl-4-hydroxy-piperidin-N-Oxid.

Verbindungen der Klasse der HALS (HALS = hindered amine light stabilizers) sind als Stabilisatoren weniger geeignet, da sie bekanntermaßen keine so effektive Stabilisierung ermöglichen und vielmehr zu einer "schleichenden" radikalischen Polymerisation ungesättigter Gruppen führen können.

Die Stabilisatoren sind so zu wählen, dass sie unter dem Einfluss des Allophanatisierungskatalysators stabil sind und unter den Reaktionsbedingungen nicht mit einer Komponente des erfindungsgemäßen Verfahrens reagieren. Dies kann zum Verlust der Stabilisierungseigenschaft führen.

Zur Stabilisierung der Reaktionsmischung, insbesondere bei Vorliegen ungesättigter strahlenhärtender Gruppen, gegen vorzeitige Polymerisation, kann während der Urethanisierung und/oder der Allophanatisierung ein sauerstoffhaltiges Gas, bevorzugt Luft, in und/oder über das Reaktionsgemisch während der geleitet werden. Es ist bevorzugt, dass das Gas einen möglichst geringen Anteil an Feuchtigkeit besitzt, um unerwünschte Reaktion bei Vorhandensein von Isocyanat zu verhindern.

In einer bevorzugten Ausführungsform, wenn niedrigviskose strahlenhärtende Verbindungen hergestellt werden sollen, wird während der Herstellung der Urethanisierung und der anschließenden Allophanatisierung ein Stabilisator der vorstehend genannten Art zugesetzt und abschließend, nach Allophanatisierung, um eine Langzeitstabilität zu erreichen, nochmals mit einem phenolischen Stabilisator nachstabilisiert und ggf. das Reaktionsprodukt mit Luft gesättigt.

Der Stabilisator kommt dabei typischerweise in Mengen von 0.001 - 5,0 Gew.%, bevorzugt 0.01 - 2,0 Gew.-% und besonders bevorzugt 0,05 - 1,0 Gew.-% bezogen auf Festgehalt des Verfahrensprodukts zum Einsatz.

Die erfindungsgemäßen Allophanate können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings bei Vernetzung über strahlenhärtende Gruppen Voraussetzung, dass mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten.

Das Auftragen der erfmdungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate zur Beschichtung oder Verklebung sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASÄ, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Besonders vorteilhaft ist die erfindungsgemäße Allophanatisierung zur schonenden Herstellung von Komponenten für strahlenhärtende Beschichtungsmittel, Kleb- oder Dichstoffe, die entweder einzig strahlenhärtend oder sogenannte Dual-Cure-Systeme sind, bei denen eine kombinierte Aushärtung durch Strahlenhärtung und Vernetzung unter Urethan oder Harnstoffbildung stattfindet.

Daher sind ein weiterer Gegenstand der Erfindung Beschichtungsmittel enthaltend
a) ein oder mehrere der erfindungsgemäßen Allophanate, wobei die in den erfindungsgemäßen Allophanaten enthaltenen Allophanatgruppen zu mindestens 10 Mol% der allgemeinen Formel (I) entsprechen, 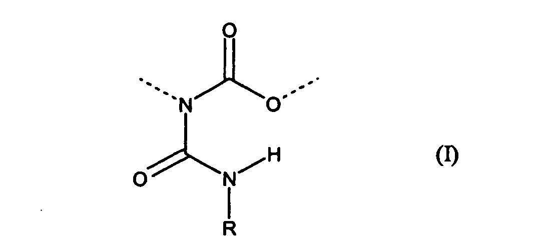 wobei R ein Methyl-, Isopropyl-, n-Butyl-, tert.-Butyl-, n-Hexyl-, Cyclohexyl-, Stearyl-, Phenyl- (einschl. chlorierte Formen), 1-Naphtyl-, o-, m-, oder p-Toloyl- (einschl. fluorierte und chlorierte Formen), p-Isopropylphenyl-, 2,6-Diisopropylphenyl- oder p-Toluolsulfonylrest ist, und die Verbindungen wenigstens eine strahlenhärtende Gruppe ausgewählt aus der Gruppe von Vinylether-, Maleinyl-, Fumaryl-, Maleinimid-, Dicyclopentadienyl-, Acrylamid-, Acryl- und Methacryl-Gruppen enthalten.
b) gegebenenfalls ein oder mehrere Polyisocyanate mit freien oder blockierten Isocyanatgruppen, die frei sind von strahlenhärtenden Gruppen,
c) gegebenenfalls weitere von denen aus a) verschiedene Verbindungen mit strahlenhärtenden Gruppen, die gegebenenfalls freie oder blockierte NCO-Gruppen aufweisen,
d) gegebenenfalls ein oder mehrere mit Isocyanaten reagierende, aktiven Wasserstoff enthaltende Verbindungen
e) Initiatoren,
f) gegebenenfalls Lösemittel und
g) gegebenenfalls Hilfs- und Zusatzstoffe.

Die Polyisocyanate der Komponente b) sind dem Fachmann an sich bekannt. Bevorzugt werden hier gegebenenfalls mit Isocyanurat-, Allophanat-, Biuret-, Uretdion- und/oder Iminooxadiazintriongruppen modifizierte Verbindungen auf Hexamethylendiisocyanat-, Isophorondiisocyanat-, 4,4'-Diisocyanatodicyclohexylmethan- und/oder Trimethylhexamethylendiisocyanat-Basis verwendet.

Zu den Verbindungen der Komponente c) gehören Verbindungen wie insbesondere Urethanacrylate bevorzugt auf Hexamethylendiisocyanat-, Isophorondiisocyanat-, 4,4'-Diisocyanatodicyclohexylmethan- und/oder Trimethylhexamethylendüsocyanat-Basis, welche gegebenenfalls mit Isocyanurat-, Allophanat-, Biuret-, Uretdion- und/oder Iminooxadiazintriongruppen modifiziert sein können, welche keine gegenüber Isocyanatgruppen reaktive, aktiven Wasserstoff enthaltene Funktionen aufweisen.

NCO-haltige Urethanacrylate sind kommerziell bei der Bayer MaterialScience AG, Leverkusen, DE als Roskydal® UA VP LS 2337, Roskydal® UA VP LS 2396 oder Roskydal® UA XP 2510 erhältlich.

Weiterhin können die bereits beschriebenen und in der Technik der strahlenhärtenden Beschichtungen bekannten Reaktivverdünner als Bestandteil von c) verwendet werden, sofern sie keine mit NCO-Gruppen reaktiven Gruppen enthalten.

Verbindungen der Komponente d) können gesättigt oder ungesättigt sein. Mit NCO-Gruppen reagierende chemische Funktionalitäten sind aktivierte Wasserstoffatome enthaltende Funktionalitäten wie Hydroyl, Amin oder Thiol.

Bevorzugt sind gesättigte Polyhydroxyverbindungen , z.B. die an sich aus der Technologie des Beschichtens, des Klebens, der Druckfarben oder der Dichtungsmassen bekannten Polyetherpolyole, Polyesterpolyole, Polycarbonatpolyole, Poly(meth)acrylatpolyole, Polyurethanpolyole., die keine unter Einwirkung aktinischer Strahlung mit ethylenisch ungesättigten Verbindungen unter Polymerisation reagierende Gruppen aufweisen.

Ungesättigte hydroxyfunktionelle Verbindungen sind z.B. die in der Technik der strahlenhärtenden Beschichtungen bekannten Epoxyacrylate, Polyesteracrylate, Polyetheracrylate, Urethanacrylate sowie acrylierte Polyacrylate, die eine OH-Zahl von 30 bis 300 mg KOH/g aufweisen.

Weiterhin können die bereits beschriebenen und in der Technik der strahlenhärtenden Beschichtungen bekannten Reaktivverdünner als Bestandteil von d) verwendet werden, sofern sie mit NCO-Gruppen reaktive Gruppen enthalten.

Als Initiatoren der Komponente e) für eine radikalische Polymerisation können durch Strahlung und/oder thermisch aktivierbare Initiatoren zum Einsatz kommen. Fotoinitiatoren, die durch UV-oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2-Azobis{2-methyl-N-[2-(1-hydroxybutyl)]propionamide), 2,2'-Azobis{2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z.B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Zu den Hilfs- und Zusatzstoffen der Komponente f) gehören Lösemittel der vorstehend genannten Art.

Des Weiteren können in g) zur Erhöhung der Wetterstabilität der gehärteten Lackschicht auch UV-Absorber und/oder HALS-Stabilisatoren enthalten sein. Bevorzugt ist die Kombination. Erstere sollten einen Absorptionsbereich von maximal 390 nm haben wie Triphenyltriazintypen (z.B. Tinuvin® 400 (Ciba Spezialitätenchemie GmbH, Lampertheim, DE)), Benztriazole wie Tinuvin® 622 (Ciba Spezialitätenchemie GmbH, Lampertheim, DE) oder Oxalsäuredianilide (z.B. Sanduvor® 3206 (Clariant, Muttenz, CH))) und werden in 0,5 - 3,5 Gew.-% bezogen auf Festharz zugegeben. Geeignete HALS-Stabilisatoren sind kommerziell erhältlich (Tinuvin® 292 oder Tinuvin® 123 (Ciba Spezialitätenchemie GmbH, Lampertheim, DE) oder Sanduvor® 3258 (Clariant, Muttenz, CH). Bevorzugte Mengen sind 0,5-2,5 Gew.-% bezogen auf Festharz.

Ebenfalls können in e) Pigmente, Farbstoffe, Füllstoffe, Verlaufs- und Entlüftungsadditive enthalten sein.

Darüber hinaus können, sofern erforderlich die aus der Polyurethanchemie bekannten Katalysatoren zur Beschleunigung der NCO/OH-Reaktion in g) enthalten sein. Dies sind z.B. Zinn- oder Zinksalze oder Zinnorganoverbindungen, Zinn- und/oder Zinkseifen wie z.B. Zinnoctoat, Dibutylzinndilaurat, Dibutylzinnoxid oder tertiäre Amine wie z. B. Diazabicyclo[2,2,2]octan (DABCO).

Nach Applikation können zur Aushärtung durch Ablüften z.B. enthaltene Lösemittel ganz oder teilweise entfernt werden.

Anschließend oder gleichzeitig können der oder die ggf. notwendigen thermischen und der und die photochemischen Aushärtungsprozesse nacheinander oder gleichzeitig durchgeführt werden.

Falls notwendig kann die thermische Härtung kann bei Raumtemperatur aber auch bei erhöhter Temperatur, vorzugsweise bei 40 - 160°C, bevorzugte bei 60 - 130°C, besonders bevorzugte bei 80-110°C erfolgen.

Bei Verwendung von Photoinitiatoren in d) erfolgt die Strahlungshärtung bevorzugt durch Einwirkung energiereicher Strahlung, also UV-Strahlung oder Tageslicht, z.B. Licht der Wellenlänge 200 bis 700 nm oder durch Bestrahlen mit energiereichen Elektronen (Elektronenstrahlung, 150 bis 300 keV). Als Strahlungsquellen für Licht oder UV-Licht dienen beispielsweise Hoch-oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Bei Verwendung von thermisch aktivierbaren Initiatoren in d) wird die Härtung durch Erhöhung der Temperatur erreicht. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

### Beispiele

Alle Prozentangaben beziehen sich, sofern nicht abweichend angegeben, auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Platte-Platte Rotationsviskosimeter, RotoVisko 1 der Firma Haake, DE nach ISO/DIS 3219:1990 durchgeführt.

Die zur Zeit der Versuchsdurchführung herrschende Umgebungstemperatur von 23°C wird als RT bezeichnet.

### Herstellung von Cholin-2-ethylhexanoat

In einem 1000 ml Glaskolben mit Rührvorrichtung wurden bei RT 83 g Natrium-2-ethylhexanoat in 600 ml Methanol gelöst. Es wurden anschließend 69,8 g Cholinchlorid portionsweise zugegeben, und die Mischung wurde weitere 10 Stunden bei Raumtemperatur gerührt. Der entstandene Niederschlag wurde abfiltriert und die Lösung am Rotationsverdampfer unter vermindertem Druck auf etwa ein Drittel eingeengt, bis sich erneut ein Niederschlag bildete. Es wurde mit etwa 400 ml Aceton verdünnt, erneut filtriert und das Lösungsmittel unter vermindertem Druck wiederum abgezogen. Der verbleibende Rest wurde abermals in etwa 400 ml Aceton aufgenommen, filtriert und das Lösungsmittel abgezogen. Es wurden 117 g kristallisationsstabiles, flüssiges Produkt erhalten, das in dieser Form als Allophanatisierungskatalysator eingesetzt wurde.

### Beispiel 1: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 175,77 g Hexamethylendiisocyanat (Desmodur® H, Bayer MaterialScience, Leverkusen, DE) und 50mg Phenothiazin vorgelegt und auf 70°C erwärmt. Es wurden 25 mg Dibutylzinndilaurat (Desmorapid Z, Bayer MaterialScience, Leverkusen) zugegeben und 203,79 g Hydroxypropylacrylat so zugetropft, dass die Temperatur 80°C nicht überschritt. Es wurde nachgerührt, bis der theoretische NCO-Wert von 5,77 % erreicht war. Anschließend wurden 119,61 g Hexylisocyanat beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,74 %, der durch Zugabe von 2,6 g Methanol und Rühren über zwei Stunden bei 60°C abreagiert wurde. Es wurde ein farbloses Harz mit einem Rest-NCO-Gehalt von 0 % und einer Viskosität von 13.000 mPas(23°C) erhalten.

### Beispiel 2: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 185,57 g Hexamethylendiisocyanat (Desmodur® H, Bayer MaterialScience, Leverkusen, DE) und 25 mg Phenothiazin vorgelegt und auf 70°C erwärmt. Es wurden 25 mg Dibutylzinndilaurat (Desmorapid Z, Bayer MaterialScience, Leverkusen) zugegeben und 215,15 g Hydroxypropylacrylat so zugetropft, dass die Temperatur 80°C nicht überschritt. Es wurde nachgerührt, bis der theoretische NCO-Wert von 5,77 % erreicht war. Anschließend wurden 98,48 g Butylisocyanat (Lanxess, Leverkusen, Gehalt an hydrolysierbarem Chlor ca. 100 ppm) beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,45 %, der durch Zugabe von 1,7 g Methanol und Rühren über zwei Stunden bei 60°C abreagiert wurde. Es wurde ein farbloses Harz mit einem Rest-NCO-Gehalt von 0 % und einer Viskosität von 25.500 mPas(23°C) erhalten.

### Vergleichsbeispiel zu 1 und 2: Nicht erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 231,16 g Hexamethylendiisocyanat (Desmodur® H, Bayer MaterialScience, Leverkusen, DE) und 50 mg Phenothiazin vorgelegt und auf 70°C erwärmt. Es wurden 25 mg Dibutylzinndilaurat (Desmorapid Z, Bayer MaterialScience, Leverkusen, DE) zugegeben und 268,01 g Hydroxypropylacrylat so zugetropft, dass die Temperatur 80°C nicht überschritt. Es wurde nachgerührt, bis der theoretische NCO-Wert von 5,77 % erreicht war. Anschließend wurde die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Es wurde ein farbloses Harz mit einem Rest-NCO-Gehalt von 0,1 % und einer Viskosität von 75.400 mPas(23°C) erhalten.

### Beispiel 3: rfindungsgemäβes allophapathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 148,62 g Hexamethylendiisocyanat (Desmodur® H, Bayer MaterialScience, Leverkusen, DE) und 40 mg Phenothiazin vorgelegt und auf 70°C erwärmt. Es wurden 20mg Dibutylzinndilaurat (Desmorapid Z, Bayer MaterialScience, Leverkusen, DE) zugegeben und 160,82 g Hydroxypropylacrylat so zugetropft, dass die Temperatur 80°C nicht überschritt. Es wurde nachgerührt, bis der theoretische NCO-Wert von 7,18 % erreicht war. Anschließend wurden 89,90 g Hexylisocyanat beigefügt, die Temperatur auf 80°C erhöht, und es wurden über 6 Stunden 0,60 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,6 %, der durch Zugabe von 1,9 g Methanol und Rühren über zwei Stunden bei 60°C abreagiert wurde. Es wurde ein farbloses Harz mit einem Rest-NCO-Gehalt von 0 % und einer Viskosität von 27.100 mPas(23°C) erhalten.

### Beispiel 4: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 195,47 g Hexamethylendiisocyanat (Desmodur® H, Bayer MaterialScience, Leverkusen) und 25 mg Phenothiazin vorgelegt und auf 70°C erwärmt. Es wurden 25 mg Dibutylzinndilaurat (Desmorapid Z, Bayer MaterialScience, Leverkusen, DE) zugegeben und 211,52 g Hydroxypropylacrylat so zugetropft, dass die Temperatur 80°C nicht überschritt. Es wurde nachgerührt, bis der theoretische NCO-Wert von 7,18 % erreicht war. Anschließend wurden 92,21 g Butylisocyanat (Lanxess, Leverkusen, Gehalt an hydrolysierbarem Chlor ca. 100 ppm) beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,3 %, der durch Zugabe von 1,2 g Methanol und Rühren über zwei Stunden bei 60°C abreagiert wurde. Es wurde ein farbloses Harz mit einem Rest-NCO-Gehalt von 0 % und einer Viskosität von 48.000 mPas(23°C) erhalten.

### Vergleichsbeispiel zu 3 und 4: Nicht erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 239,74 g Hexamethylendiisocyanat und 50 mg Phenotiazin vorgelegt und auf 70°C erwärmt. Es wurden 25 mg Dibutylzinndilaurat zugegeben und 259,43 g Hydroxypropylacrylat so zugetropft, dass die Temperatur 80°C nicht überschritt. Es wurde nachgerührt, bis der theoretische NCO-Wert von 7,18 % erreicht war. Anschließend wurden bei 70°C über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch eine weitere Stunde nachgerührt. Es wurde ein farbloses Harz mit einem Rest-NCO-Gehalt von 0,0 % und einer Viskosität von 125.000 mPas(23°C) erhalten.

### Beispiel 5: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 194,52 g Hexamethylendiisocyanat (Desmodur® H, Bayer MaterialScience, Leverkusen, DE) und 25 mg Phenothiazin vorgelegt und auf 70°C erwärmt. Es wurden 25 mg Dibutylzinndilaurat (Desmorapid Z, Bayer MaterialScience, Leverkusen) zugegeben und 201,45 g Hydroxyethylacrylat so zugetropft, dass die Temperatur 80°C nicht überschritt. Es wurde nachgerührt, bis der theoretische NCO-Wert von 6,13 % erreicht war. Anschließend wurden 103,23 g Butylisocyanat (Lanxess, Leverkusen, DE, Gehalt an hydrolysierbarem Chlor ca. 100 ppm) beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,51 %, der durch Zugabe von 2,0 g Methanol und Rühren über zwei Stunden bei 60°C abreagiert wurde. Es wurde ein farbloses Harz mit einem Rest-NCO-Gehalt von 0 % und einer Viskosität von 12.000 mPas(23°C) erhalten.

### Beispiel 6: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 177,24 g Hexamethylendiisocyanat (Desmodur® H, Bayer MaterialScience, Leverkusen, DE) und 25 mg Phenothiazin vorgelegt und auf 70°C erwärmt. Es wurden 25 mg Dibutylzinndilaurat (Desmorapid Z. Bayer MaterialScience, Leverkusen) zugegeben und 227,90 g Hydroxybutylacrylat so zugetropft, dass die Temperatur 80°C nicht überschritt. Es wurde nachgerührt, bis der theoretische NCO-Wert von 5,46 % erreicht war. Anschließend wurden 94,06 g Butylisocyanat (Lanxess, Leverkusen, DE, Gehalt an hydrolysierbarem Chlor ca. 100 ppm) beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,33 %, der durch Zugabe von 1,3 g Methanol und Rühren über zwei Stunden bei 60°C abreagiert wurde. Es wurde ein farbloses Harz mit einem Rest-NCO-Gehalt von 0 % und einer Viskosität von 3.800 mPas(23°C) erhalten.

### Beispiel 7: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 137,42 g Hexamethylendiisocyanat (Desmodur® H, Bayer MaterialScience, Leverkusen, DE) und 15 mg Phenothiazin vorgelegt und auf 70°C erwärmt. Es wurden 25 mg Dibutylzinndilaurat (Desmorapid Z, Bayer MaterialScience, Leverkusen, DE) zugegeben und 288,87 g 3-Acryloyloxy-2-hydroxypropyl-methacrylat (GAMA, Herstellung z.B. nach nicht vorveröffentlichter Anmeldung DE 10 35 77 12.2, Beispiel 17) so zugetropft, dass die Temperatur 80°C nicht überschritt. Es wurde nachgerührt, bis der theoretische NCO-Wert von 4,02 % erreicht war. Anschließend wurden 72,92 g Butylisocyanat (Lanxess, Leverkusen, DE, Gehalt an hydrolysierbarem Chlor ca. 100 ppm) beigefügt, die Temperatur auf 80°C erhöht, und es wurden über 9 Stunden 2,25 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,67 %, der durch Zugabe von 2,25 g Methanol und Rühren über zwei Stunden bei 60°C abreagiert wurde. Es wurde ein farbloses Harz mit einem Rest-NCO-Gehalt von 0% und einer Viskosität von 110.000mPas(23°C) erhalten.

### Vergleichsbeispiel zu 7: Nicht erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 160,92 g Hexamethylendiisocyanat (Desmodur® H, Bayer MaterialScience, Leverkusen, DE) und 15 mg Phenothiazin vorgelegt und auf 70°C erwärmt. Es wurden 25 mg Dibutylzinndilaurat (Desmorapid Z, Bayer MaterialScience, Leverkusen, DE) zugegeben und 338,29 g 3-Acryloyloxy-2-hydroxypropyl-methacrylat (GAMA, Herstellung z.B. nach nicht vorveröffentlichter Anmeldung DE 10 35 77 12.2, Beispiel 17) so zugetropft, dass die Temperatur 80°C nicht überschritt. Es wurde nachgerührt, bis der theoretische NCO-Wert von 4,02 % erreicht war. Es wurden dann über 9 Stunden 2,25 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,24 %, der durch Zugabe von 1,3 g Ethanol und Rühren über zwei Stunden bei 60°C abreagiert wurde. Es wurde ein farbloses Harz mit einem Rest-NCO-Gehalt von 0 % und einer nur noch schwer zu ermittelnden Viskosität von ca. 420.000 mPas(23°C) erhalten.

### Beispiel 8: Erfindungsgemäßes Allophanat und Isocyanurat-haltiges Bindemittel

In einem 2000 ml-Vierhals-Glaskolben mit Rückflusskühler, beheizbarem Ölbad, mechanischem Rührer, Luftdurchleitung, Innenthermometer und Tropftrichter wurden 949,60 g HDI-Isocyanurat (Desmodur® N3600, Bayer MaterialScience, Leverkusen, DE), 200 mg Phenothiazin, 1,99 g 2,6-Di-tert.butyl-4-methylphenol und 1,49 g Dibutylzinndilaurat (Desmorapid Z, Bayer MaterialScience, Leverkusen, DE) vorgelegt und auf 60°C erwärmt. Es wurden dann 167,73 g Hydroxypropylacrylat und anschließend 349,22 g Hydroxyethylacrylat so zugetropft, dass die Temperatur 65°C nicht überschritt. Dann wurde mit 62,88 g 2-Ethylhexandiol der Überschuss an Isocyanat umgesetzt. Es wurde nachgerührt, bis ein NCO-Gehalt nicht mehr nachzuweisen war. Anschließend wurden zunächst 6,96 g Cholin-2-ethylhexanoat und dann 459,83 g Butylisocyanat (Lanxess, Leverkusen, DE, Gehalt an hydrolysierbarem Chlor ca. 100 ppm) beigefügt und die Temperatur auf 80°C erhöht. Nach etwa einer Stunde war eine deutliche Exothermie zu verzeichnen, die eine Kühlung des Ansatzes nötig machte; es wurde noch zwei weitere Stunden nachgerührt. Abschließend wurde das farblose Harz mit 500 g Hexandioldiacrylat verdünnt. Das Produkt wies eine Viskosität von 9.800 mPas(23°C) auf.

### Velgleichsbeispiel zu 8: Nicht erfindungsgemäßes Isocyanurat-haltiges Bindemittel

In einem 2000 ml-Vierhals-Glaskolben mit Rückflusskühler, beheizbarem Ölbad, mechanischem Rührer, Luftdurchleitung, Innenthermometer und Tropftrichter wurden 744,21 g HDI-Isocyanurat (Desmodur® N3600, Bayer MaterialScience, Leverkusen, DE), 300 g Hexandioldiacrylat, 1,20 g 2,6-Di-tert.butyl-4-methylphenol und 0,09 g Dibutylzinndilaurat (Desmorapid Z, Bayer MaterialScience, Leverkusen, DE) vorgelegt und auf 60°C erwärmt. Es wurden dann 131,45 g Hydroxypropylacrylat und anschließend 273,69 g Hydroxyethylacrylat so zugetropft, dass die Temperatur 65°C nicht überschritt. Dann wurde mit 49,28 g 2-Ethylhexandiol der Überschuss an Isocyanat umgesetzt. Es wurde nachgerührt, bis ein NCO-Gehalt nicht mehr nachzuweisen war. Es wurde ein farbloses Harz mit einer Viskosität von 21.100 mPas(23°C) erhalten.

### Beispiel 9: Erfindungsgemäßes allophanathaltiges Bindemittel

In einem 1000 ml-Vierhals-Glaskolben mit Rückflußkühler, beheizbarem Ölbad, mechanischem Rührer, Luftdurchleitung, Innenthermometer und Tropftrichter wurden 124,59 g Hexamethylendiisocyanat (Desmodur® H, Bayer MaterialScience, Leverkusen, DE), 0,15 g Phenothiazin und 0,375 g Dibutylzinndilaurat (Desmorapid Z, Bayer MaterialScience, Leverkusen) vorgelegt und auf 70°C erwärmt. Es wurden dann 86.02 g Hydroxyethylacrylat und anschließend 420,2 g eines niederviskosen flüssigen Polyesters (Oxyester T1136® , Degussa, Marl, DE) so zugetropft, dass die Temperatur 85°C nicht überschritt und gerührt, bis kein Rest-NCO mehr nachweisbar war. Eine zur Viskositätsmessung gezogene Probe wurde bei Raumtemperatur fest (Vergleichswert). Anschließend wurden 117,54 g Butylisocyanat (Lanxess, Leverkusen, DE, Gehalt an hydrolysierbarem Chlor ca. 100 ppm) beigefügt, die Temperatur auf 80°C erhöht, und es wurden über 9 Stunden 2,25 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,54 %, der durch Zugabe von 3,08 g Methanol und Rühren über zwei Stunden bei 60°C abreagiert wurde. Es wurde ein farbloses Harz mit einem Rest-NCO-Gehalt von 0 % und einer Viskosität von 41.400 mPas(23°C) erhalten.

### Beispiel 10: Erfindungsgemäßes allophanathaltiges Bindemittel

In einem 2000 ml Sulfierbecher mit Vierhals-Planschliffdeckel, beheizbarem Ölbad, mechanischem Rührer, Luftdurchleitung, Innenthermometer und Tropftrichter wurden 151,2 g Hexamethylendiisocyanat (Desmodur® H, Bayer MaterialScience, Leverkusen, DE), 0,21 g Phenothiazin und 0,52 g Dibutylzinndilaurat (Desmorapid Z, Bayer MaterialScience, Leverkusen) vorgelegt und auf 80°C erwärmt. Es wurden dann 78.0 g Hydroxypropylacrylat und anschließend 1359,5 g eines Polyesters aus Adipinsäure, Butandiol, Monoethylenglykol und Diethylenglykol (Desmophen® 1652fl, Bayer MaterialScience, Leverkusen, DE) so zugetropft, dass die Temperatur 85°C nicht überschritt und gerührt, bis kein Rest-NCO mehr nachweisbar war. Die Viskosität des Produktes betrug an diesem Punkt 230.000 mPas(23°C) (Vergleichswert). Dann wurden 148,5 g Butylisocyanat (Lanxess, Leverkusen, DE, Gehalt an hydrolysierbarem Chlor ca. 100 ppm) und anschließend 2,24 g Zinkoctoat zugesetzt und zehn Stunden lang bei 80°C gerührt. Es wurden dann weitere 2,24 g Zinkoctoat beigefügt und weitere zehn Stunden gerührt. Der verbleibende Rest-NCO-Gehalt von 0,93 % wurde durch Zugabe von 7,5 g Methanol und zweistündigem Rühren bei 60°C abreagiert. Es wurde ein Harz mit einer Viskosität von 85.000 mPas(23°C) erhalten.

### Beispiel 11: Erfindungsgemäßes allophanathaltiges Bindemittel

In einem 500 ml-Vierhals-Glaskolben mit Rückflusskühler, beheizbarem Ölbad, mechanischem Rührer, Luftdurchleitung, Innenthermometer und Tropftrichter wurden 145,03 g Hexamethylendiisocyanat (Desmodur® H, Bayer MaterialScience, Leverkusen, DE) und 25mg Phenothiazin vorgelegt und auf 70°C erwärmt. Es wurden 25 mg Dibutylzinndilaurat (Desmorapid Z, Bayer MaterialScience, Leverkusen, DE) zugegeben und 200,25 g Hydroxyethylacrylat so zugetropft, dass die Temperatur 80°C nicht überschritt. Es wurde nachgerührt, bis die Mischung NCO-frei war. Eine zur Viskositätsmessung gezogene Probe wurde bei Raumtemperatur fest (Vergleichswert). Anschließend wurden 153,92 g Butylisocyanat (Lanxess, Leverkusen, DE, Gehalt an hydrolysierbarem Chlor ca. 100 ppm) beigefügt, die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,24 %, der durch Zugabe von 1,32 g Ethanol und Rühren über zwei Stunden bei 60°C abreagiert wurde. Es wurde ein farbloses Harz mit einem Rest-NCO-Gehalt von 0 % und einer Viskosität von 1.500 mPas(23°C) erhalten.

### Zusammenfassung:

| Viskositäten | | erfindungsgemäß | Vergleich |
|---|---|---|---|
| Beispiele | 1 | 13.000mPas | 75.400mPas |
| | 2 | 25.500mPas | 75.400mPas |
| | 3 | 27.100mPas | 125.000mPas |
| | 4 | 48.000mPas | 125.000mPas |
| | 5 | 12.000mPas | kein Versuch -> führt zu festem Produkt |
| | 6 | 3.800mPas | kein Versuch -> führt zu festem Produkt |
| | 7 | 110.000mPas | 420.000mPas |
| | 8 | 9.800mPas | 21.100mPas |
| | 9 | 41.400mPas | führt zu festem Produkt |
| | 10 | 85.000mPas | 230.000mPas |
| | 11 | 1.500mPas | führt zu festem Produkt |

Es ist deutlich zu erkennen, dass die nicht modifizierten Bindemittel eine doppelt bis sechsfach höhere Viskosität aufweisen als die erfindungsgemäß modifizierten Bindemittel.

### Beispiel 12: Lackformulierung und Lack

Ein Teil des Produkts aus Beispiel 5 wurde mit 5,0 % des Photoinitiators Darocur® 1173 (Photoinitiator, Handelsprodukt der Ciba Spezialitätenchemie GmbH, Lampertheim, DE) intensiv gemischt. Mittels eines Knochen-Rakels mit einem Spalt von 120 µm wurde die Mischung als dünner Film auf eine Glasplatte aufgezogen. Nach UV-Bestrahlung (Quecksilbermitteldruckstrahler, IST Metz GmbH, Nürtingen, DE, 750 mJ/cm²) wurde eine transparente, Beschichtung erhalten, die eine Shore A-Härte von 126 aufwies.

## Patentansprüche

1. Verfahren zur Senkung der Viskosität von Zusammensetzungen enthaltend urethangruppenhaltige Verbindungen, bei dem die darin enthaltenen Urethangruppen ganz oder teilweise mit Monoisocyanaten zu Allophanatgruppen umgesetzt werden und die urethangruppenhaltige Verbindung wenigstens eine strahlenhärtende Gruppe ausgewählt aus der Gruppe von Vinylether-, Maleinyl-, Fumaryl-, Maleinimid-, Dicyclopentadienyl-, Acrylamid-, Acryl- und Methacryl-Gruppen enthält.

2. Verfahren gemäß Anspruch 1, **dadurch gekennzeichnet, dass** als Monoisocyanate Alkylisocyanate mit 1 - 20 C-Atomen im Alkylrest oder Arylisocyanate mit 6 - 20 C-Atomen im Arylrest eingesetzt werden, wobei die genannten Alkyl- oder Arylreste neben der NCO-Funktion noch andere funktionelle Gruppen haben könnten, die jedoch weder Isocyanatgruppen noch von NCO-Gruppen abgeleitete Strukturen haben.

3. Verfahren gemäß Anspruch 1 oder 2, **dadurch gekennzeichnet, dass** als Monoisocyanate n-Butyl- oder n-Hexylisocyanat eingesetzt werden.

4. Verfahren gemäß einem der Ansprüche 1 bis 3, **dadurch gekennzeichnet, dass** zur Allophanatisierung ein Katalysator zugesetzt wird.

5. Verfahren gemäß Anspruch 4, **dadurch gekennzeichnet, dass** der Katalysator ein Tetraalkylammoniumalkanoat oder Zinkoctoat ist.

6. Allophanatgruppenhaltige Verbindungen, wobei die darin enthaltenden Allophanatgruppen zu mindestens 10 Mol% der allgemeinen Formel (I) entsprechen 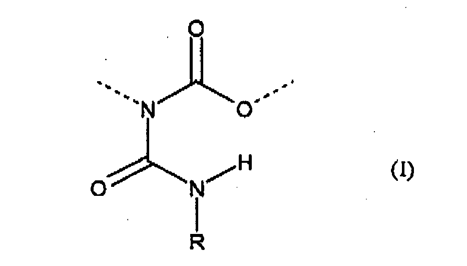
wobei R ein Methyl-, Isopropyl-, n-Butyl-, tert.-Butyl-, n-Hexyl-, Cyclohexyl-, Stearyl-. Phenyl- (einschl. chlorierte Formen), 1-Naphtyl-, o-, m-, oder p-Toloyl- (einschl. fluorierte und chlorierte Formen), p-Isopropylphenyl-, 2,6-Diisopropylphenyl- oder p-Toluolsulfonylrest ist,
und die Verbindungen wenigstens eine strahlenhärtende Gruppen ausgewählt aus der Gruppe von Vinylether-, Maleinyl-, Fumaryl-, Maleinimid-, Dieyclopentadienyl-, Acrylamid-, Acryl- und Methacryl-Gruppen enthalten.

7. Allophanatgruppenhaltige Verbindungen gemäß Anspruch 6, **dadurch gekennzeichnet, dass** der Rest R von n-Butyl- oder n-Hexylisocyanat abgeleitet ist.

8. Allophanatgruppenhaltige Verbindungen gemäß Anspruch 6 oder 7, **dadurch gekennzeichnet, dass** wenigstens 40 Mol.-% der darin enthaltenen Allophanatgruppen der Formel (I) entsprechen.

9. Verwendung der allophanatgruppenhaltigen Verbindungen gemäß einem der Ansprüche 6 bis 8 bei der Herstellung von Beschichtungen, Klebstoffen und Dichtstoffen.

10. Beschichtungsmittel enthaltend
a) ein oder mehrere allophanatgruppenhaltige Verbindungen gemäß einem der Ansprüche 6 bis 8,
b) gegebenenfalls ein oder mehrere Polyisocyanate mit freien oder blockierten Isocyanatgruppen, die frei sind von strahlenhärtenden Gruppen,
c) gegebenenfalls weitere von denen aus a) verschiedene Verbindungen mit strahlenhärtenden Gruppen, die gegebenenfalls freie oder blockierte NCO-Gruppen aufweisen,
d) gegebenenfalls ein oder mehrere mit Isocyanaten reagierende, aktiven Wasserstoff enthaltende Verbindungen
e) Initiatoren,
f) gegebenenfalls Lösemittel und
g) gegebenenfalls Hilfs- und Zusatzstoffe.

11. Substrate beschichtet mit Beschichtungen erhältlich gemäß Anspruch 10.

## Claims

1. Process for lowering the viscosity of compositions comprising compounds containing urethane groups, wherein all or some of the urethane groups present therein are reacted with monoisocyanates to form allophanate groups, and the compound containing urethane groups contains at least one radiation-curing group selected from the group of vinyl ether, maleyl, fumaryl, maleimide, dicyclopentadienyl, acrylamide, acrylic and methacrylic groups.

2. Process according to Claim 1, **characterized in that** monoisocyanates used comprise alkyl isocyanates having 1-20 C atoms in the alkyl radical or aryl isocyanates having 6-20 C atoms in the aryl radical, where the stated alkyl or aryl radicals may have, in addition to the NCO function, other functional groups which, however, have neither isocyanate groups nor structures derived from NCO groups.

3. Process according to Claim 1 or 2, **characterized in that** monoisocyanates used comprise n-butyl isocyanate or n-hexyl isocyanate.

4. Process according to any of Claims 1 to 3, **characterized in that** a catalyst is added for the allophanatization.

5. Process according to Claim 4, **characterized in that** the catalyst is a tetraalkylammonium alkanoate or zinc octoate.

6. Compounds containing allophanate groups, wherein at least 10 mole % of the allophanate groups contained therein correspond to the general formula (I) 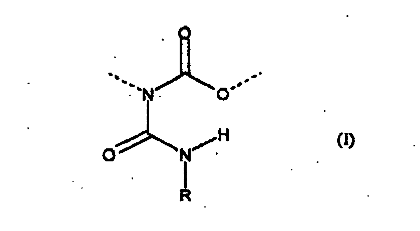
where R is a methyl, isopropyl, n-butyl, tert-butyl, n-hexyl, cyclohexyl, stearyl, phenyl (including chlorinated forms), 1-naphthyl, o-, m- or p-tolyl (including fluorinated and chlorinated forms), p-isopropylphenyl, 2,6-diisopropylphenyl or p-toluenesulphonyl radical,
and the compounds contain at least one radiation-curing group selected from the group of vinyl ether, maleyl, fumaryl, maleimide, dicyclopentadienyl, acrylamide, acrylic and methacrylic groups.

7. Compounds containing allophanate groups according to Claim 6, **characterized in that** the radical R derives from n-butyl isocyanate or n-hexyl isocyanate.

8. Compounds containing allophanate groups according to Claim 6 or 7, **characterized in that** at least 40 mole % of the allophanate groups contained therein correspond to the formula (I).

9. Use of the compounds containing allophanate groups according to any of Claims 6 to 8 in the production of coatings, adhesives and sealants.

10. Coating compositions comprising
a) one or more compounds containing allophanate groups according to any of Claims 6 to 8,
b) optionally one or more polyisocyanates having free or blocked isocyanate groups, which are free from radiation-curing groups,
c) optionally further compounds, different from those of a), having radiation-curing groups, which optionally have free or blocked NCO groups,
d) optionally one or more isocyanate-reactive compounds containing active hydrogen,
e) initiators,
f) optionally solvents and
g) optionally auxiliaries and additives.

11. Substrates coated with coatings obtainable according to Claim 10.

## Revendications

1. Procédé pour la diminution de la viscosité de compositions qui contiennent des composés contenant des groupes uréthanne, dans lequel les groupes uréthanne contenus dans ceux-ci sont mis à réagir en partie ou en totalité avec des mono-isocyanates pour donner des groupes allophanate et le composé contenant des groupes uréthanne contient au moins un groupe durcissable par irradiation, choisi dans l'ensemble des groupes éther vinylique, maléyle, fumaryle, maléimide, dicyclopentadiényle, acrylamido, acryloyle et méthacryloyle.

2. Procédé selon la revendication 1, **caractérisé en ce qu'**on utilise comme mono-isocyanates des isocyanates d'alkyle ayant de 1 à 20 atomes de carbone dans le radical alkyle ou des isocyanates d'aryle ayant de 6 à 20 atomes de carbone dans le radical aryle, les radicaux alkyle ou aryle nommés pouvant comporter, en plus de la fonction NCO, encore d'autres groupes fonctionnels, qui toutefois ne comportent ni groupes isocyanate, ni structures dérivées de groupes NCO.

3. Procédé selon la revendication 1 ou 2, **caractérisé en ce qu'**on utilise comme mono-isocyanates l'isocyanate de n-butyle ou de n-hexyle.

4. Procédé selon l'une quelconque des revendications 1 à 3, **caractérisé en ce que** dans l'allophanatisation on ajoute un catalyseur.

5. Procédé selon la revendication 4, **caractérisé en ce que** le catalyseur est un alcanoate de tétraalkylammonium ou l'octoate de zinc.

6. Composés contenant des groupes allophanate, les groupes allophanate contenus dans ceux-ci correspondant à raison d'au moins 10 % en moles à la formule générale (I) 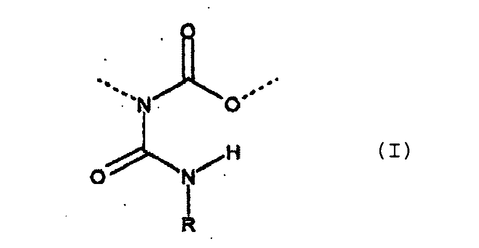
dans laquelle R est un groupe méthyle, isopropyle, n-butyle, tert-butyle, n-hexyle, cyclohexyle, stéaryle, phényle, (y compris les formes chlorées), 1-naphtyle, o-, m-, ou p-tolyle (y compris les formes chlorées et les formes fluorées), p-isopropylphényle, 2,6-diisopropylphényle ou p-toluènesulfonyle,
et les composés contiennent au moins un groupe durcissable par irradiation, choisi dans l'ensemble constitué par les groupes éther vinylique, maléyle, fumaryle, maléimide, dicyclopentadiényle, acrylamido, acryloyle et méthacryloyle.

7. Composés contenant des groupes allophanate selon la revendication 6, **caractérisés en ce que** le radical R est dérivé d'isocyanate de n-butyle ou n-hexyle.

8. Composés contenant des groupes allophanate selon la revendication 6 ou 7, **caractérisés en ce qu'**au moins 40 % en moles des groupes allophanate contenus dans ceux-ci correspondent à la formule (I).

9. Utilisation des composés contenant des groupes allophanate selon l'une quelconque des revendications 6 à 8, dans la production de revêtements, d'adhésifs et de matières d'étanchéité.

10. Composition de revêtement contenant
a) un ou plusieurs composés contenant des groupes allophanate selon l'une quelconque des revendications 6 à 8,
b) éventuellement un ou plusieurs polyisocyanates à groupes isocyanate libres ou bloqués, qui sont exempts de groupes durcissables par irradiation,
c) éventuellement d'autres composés différents de ceux de a), à groupes durcissables par irradiation, qui éventuellement comportent des groupes NCO libres ou bloqués,
d) éventuellement un ou plusieurs composés contenant de l'hydrogène actif, qui réagissent avec des isocyanates
e) des amorceurs,
f) éventuellement des solvants et
g) éventuellement des additifs et adjuvants.

11. Subjectiles revêtus avec des revêtements pouvant être obtenus selon la revendication 10.
